Europäisches Patentamt

European Patent Office

Office européen des brevets

(11) Publication number: **0 389 735**
**A1**

## (12) EUROPEAN PATENT APPLICATION

(21) Application number: **89830136.1**

(22) Date of filing: **28.03.89**

(51) Int. Cl.5: **B29B 17/00, B30B 9/30,**
**G07F 7/06, B65F 1/00**

(43) Date of publication of application:
**03.10.90 Bulletin 90/40**

(84) Designated Contracting States:
**AT BE CH DE ES FR GB GR IT LI LU NL SE**

(71) Applicant: **GOVONI SPA**
**Via Bondenese, 12**
**Casumaro Ferrara(IT)**

(72) Inventor: **Gulmini, Carlo**
**via Ex-dogana 7**
**Casumaro (Ferrara)(IT)**

(74) Representative: **Sassatelli, Franco T., Dr.**
**c/o INIP via Ruggi 5**
**I-40137 Bologna(IT)**

(54) **Unit for collecting and recycling used bottles, cans and similar in metal and plastic materials.**

(57) The unit carries out automatically differentiated working cycles in a closed cubicle compartment and is foreseen with two upper openings for hand introduction of plastic containers into one of them (1) and metal ones into the other opening (2). The plastic container is stopped, after having been introduced through opening (1), by a gate (4) on pipe (3) allowing the passage, through its central opening (5), of the container neck only in order to interrupt the flow of the photocell (6) towards the reflector (7). The said photocell activated an electric piston (8) which, by means of an lever (9), lets the gate (4) turn in opening on fulcrum (10). Through a pressing conveyer (11), the accepted container is introduced, by its neck by the intermediate roller pair (25), between the pair of squeezing rollers (12). The recovery body thus obtained falls into the collector (13), which can be taken away by previously opening a door. From the inlet opening (2) on duct (15), the metal container is recognized by a sensor (16) which recognizes its kind - either iron or aluminium - in order to qualify or not its payment. In descent in a conveyor (17), the container passes before a counting photocell (18) and is squeezed by a pair of coaxial rollers (19) turning together with other squeezing rollers (12). The relevant recovered body gets outside through a canal (21) after having opened a door (22).

## "Unit for collecting and recycling used bottles, cans and similar in metal and plastic materials"

The machine mainly operates automatically to collect and recycle in a combined operation, in differentiated operational compartments, used plastic and metal containers, such as bottles, cans and similar ones. The device allows to centralize and unify the differentiated collecting points of waste materials which can be recovered, such as for instance the ones connected with the distribution of liquid foodstuffs, where the exigency exists of recovering the used plastic and metal containers.

At present, these containers are thrown away into the solid urban waste, thus scattering an energetical potential connected with the material of conformation and a theorical economic residuary value. To all that, the heavy problems must be added in connection with the surrounding that at present are caused by the elimination of these containers. The invention device introduces a new conception system which performs the collecting and recycling of the used containers both in plastic and metal materials on the same distribution points, by adopting an unit which, while performing a compacting action of the materials in a mechanical way, does not turn out a pollution of the surroundings.

As an incentivating means for the recovery of the used containers, the unit can be supplied either with one or more distributors of bottles and/or cans filled at the origin, to distribute to the consignee of a previously ordered number of returned empty containers.

The unit delivers a pull ticket recording the number of delivered bottles to recover as well as the amount to reimburse or, alternatively, the number and type of filled containers that have to be delivered. The system allows to establish the number and type of the delivered bottles to recover, also by means of a magnetic card.

The unit shows different operational cycles, in a closed cubicle compartment, with two upper inlets 1 and 2 for the manual input the first of the plastic containers and the second for metal containers and with lower doors for drawing of the recycled materials.

The operative cycle for the plastic containers begins with their input through opening 1 and, moreover, the unit accepts them only if they are introduced by the neck. The descending container in pipe 3 is stopped by gate 4, with central opening 5, which allows but the passage of the container neck. In this position, the neck interrupts the luminous flux of a photo cell 6 towards the reflector 7, thus permitting the gate 4 opening. This gate is opened by means of the electrical piston 8 which, through the lever 9, lets it turn in opening around fulcrum 10. The accepted container then falls into a funnel-shaped compressing sector 11 which conveys it towards the two pairs of rollers 12 driven by relevant motor variators. These pairs of rollers turn in counter-turning synchronism, drag the container in introduction and squeeze it. A recovery squeezed form comes out which falls into the lower collector 13 in the machine inside and can be taken away by opening a door foreseen for this purpose. Moreover, photocell 14 is foreseen which detects the passage of the container and charges an electronic totalizing counter.

The operational cycle of the metal containers begins when they are introduced into opening 2. The container sinks along duct 15 where it is individuated by a special sensor 16 which points out whether the container is in aluminium of in ferrous material. This enables to either pay or not the security for the returned container. This last one then sinks along the funnel-shaped conveyor 17, passes before the counting photocell 18 and is squeezed by a pair of coaxial rollers 19 turning together with the rollers 12. A recovered squeezed form gets out which falls into the underlying unit container 20. Alternatively, the above recovered forms can be brought outside the machine by means of a conveying channel 21 into an outer collecting container through door 22. Particularly important detail of the squeezing system is that the rollers 12, for recovering plastic containers, are fitted with the outer diameters tangentially to each other whereas the teeth 23, obtained on the periphery of each wheel, are fitted in phase and the cuts 24 of each tooth meet on the straight lines connecting the two rotation centers of the rollers. Furthermore, the number of the teeth is the same in each roller with the same diameter. What precedes enables to perform micro cuts on the plastic material which allow to maintain the squeezed form and thus to remain with a minimum encumbrance. Furthermore, the central part between the two pairs of rollers 12 shows an additional pair of rollers 25 with smaller diameter, still indented in a similar way, in order to determine a space for introducing the container neck which was accepted at the beginning only in such position.

The use of the roller system 12 and 25 with different diameter allows to restrict the roller diameter and, therefore, to limit the encumbrance as well as the costs of the unit. Important particular in the rollers 19, used for recovering the metal material containers, is the fact that they are fitted with an outer indenture of flat tangent teeth 26 and flat compenetrating ones 27 what enables to hook the parts when introduced and their ejection on discharging.

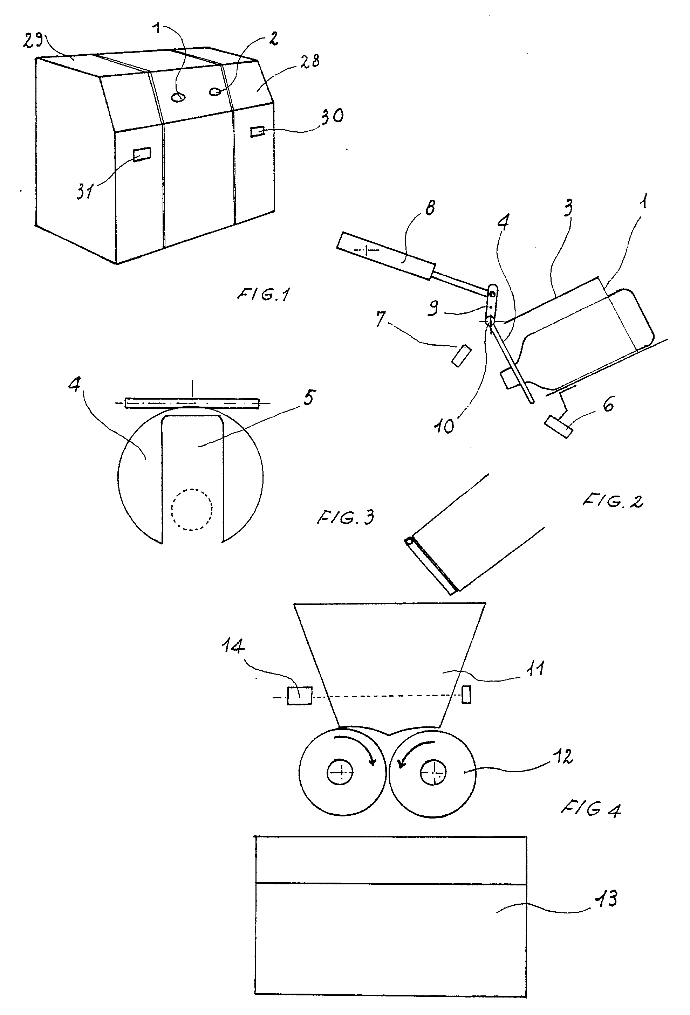

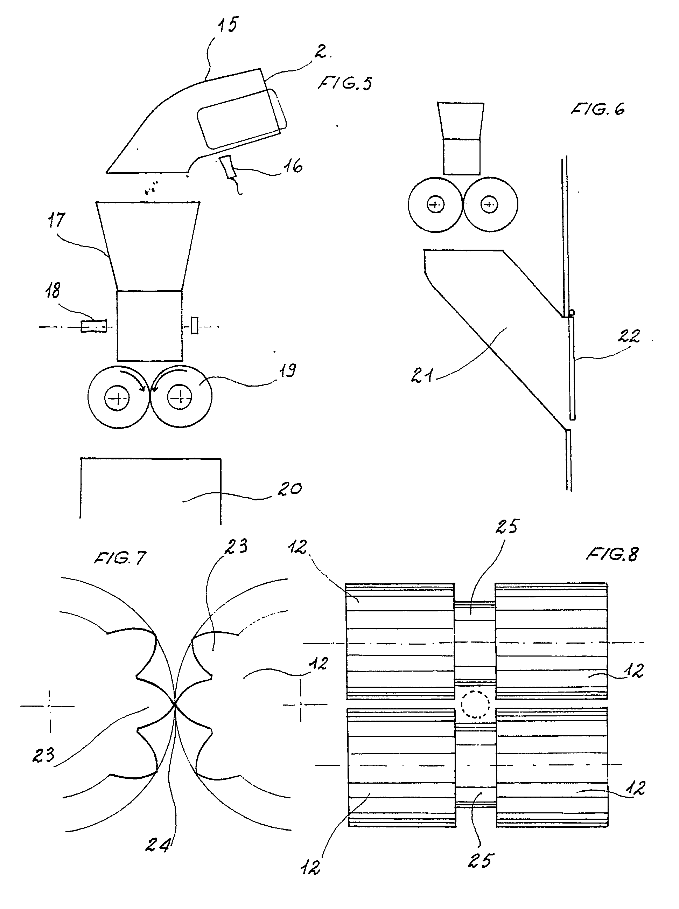

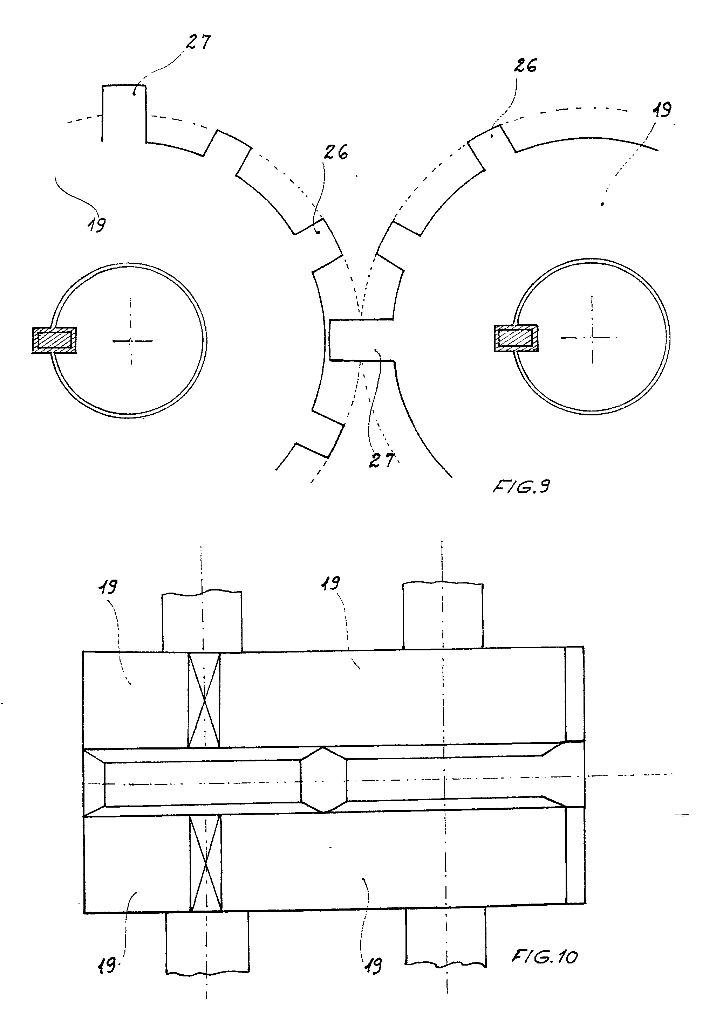

In version the distributor of filled containers supplied in exchange of the delivered used ones - this distributor can be connected to the unit in different ways - uses two side cases 28 and 29 in which filled containers with a similar or different product are inserted. The delivery of these filled containers is automatical through doors 30 and 32, according to a program established in advance of a given type of filled containers against a given type of returned ones. This phase is integrated in the operation system completely automatically allowed by the unit, thus excluding the necessity of a staff intervention on the collection point. In particular, the computerization of the management program in the interrelation of the delivered empty containers against filled ones to supply, leads to the emission of a magnetic card to credit the number of returned containers up to the number foreseen which entitles to get a filled one. The reading system of a bar code on the bottles, fitted at the inlet of the unit, enables to identify the producer company, the material type and other information, thus collecting the data that can be noted in machine computer. By means of a portable instrument, the data will be collected on a proper storage system and sent to a central computer. An execution form is illustrated in an indicative way in the drawings of tables 1, 2 and 3. With reference to these tables, fig. 1 in table 1 is the view of a unit equipped with a side cases 28 and 29 distributor. Referring to the operative compartment for plastic containers, fig. 2 is the view of the intercepting device of the container at the entrance enabling to recognize the correct position at the introduction moment, whereas fig. 3 is the view of the intercepting gate 4 foreseen with the central opening 5 for the passage of the only container neck. Fig. 4 on the contrary, is the view of the squeezing roller system 12. Table 2 refers to the operative compartment for metal containers. Fig. 5 is the view of the inlet, recognizing and squeezing sectors. Fig. 6 is the view of the discharging means of recovered shapes. Fig. 7 is a particular of the squeezing 12 for plastic containers to be observed in cross section to show the teeth sets in tangent contact, while fig. 8 is the view from above of the same complete squeezing system to show the distanced position of the roller couple 25 and with hatching view of a hypothetical bottle neck introduced in the interspace. In table 3 fig. 9 is a particular concerning the squeezing rollers 19 for metal containers. In a cross section view, the different teeth sets can be noted as well as the relevant interrelation. Fig. 10 is the view from above of the two roller couples 19.

The unit can be shaped in different ways as a closed container and equipped on a frame.

## Claims

1) Unit for collecting and recycling used bottles, cans and similar in metal and plastic materials, characterized by the fact that two different operative cycles are foreseen in a closed cubicle compartment with two above openings for the hand introduction of plastic material into one opening (1) and metal material containers into the other opening (2), with lower doors to open for getting out the two different recovery bodies. The operative cycle concerning the recycling of plastic containers is activated when the container, introduced into opening (1), sinks on pipe (3) and gets against a gate (4) which, through its central opening (5), allows the passage of the neck only. This neck interrupts the flux of the photocell (6) against a reflector (7) and allows an electric piston (8) to work which, by means of a lever (9) lets a gate turn on a fulcrum (10) and opens it thus permitting the passage. Therefore the container falls into a pressure conveyor (11) and is introduced by the neck by an intermediate couple of rollers (25), between two squeezing roller couples (12). This operative combination, consisting of the squeezing roller couples (12) and intermediate rollers (25) with differentiated diameters, allows to reduce the size of the squeezing assembly. The recovered body then falls into an inside collector (13) which can be removed by opening a door. The operative cycle for recycling metal containers after having introduced the container through the opening (2), foresees the passage of the container through a conduit (15) where it is felt by a sensor (16) which recognizes the material type (either aluminium of ferrous) to autorize or not payment. The container then sinks into a conveyor (17) passes before a photocell (18) which counts it, and is squeezed by a couple of coaxial rollers (19) which turn contemporarily with the other squeezing rollers (12). The recovery body thus obtained then gets outside by means of channel (21) through the relevant door (22).

2) Unit for collecting and recycling used bottles, cans and similar in metal and plastic materials, as per claim 1), characterized by the fact that the squeezing rollers (12) for recovering pastic containers operate with the outer diameters tangent the ones with the others, while their teeth (23) on the periphery of each wheel are put in phase and the edges (24) of each tooth meet on the straight lines connecting the two turning centres of the rollers; furthermore, the same number of teeth has been foreseen for each roller of the same diameter. This causes microcuts on the material to maintain the recovery form.

3) Unit for collecting and recycling used bottles, cans and similar in metal and plastic material, as per claim 1), characterized by the fact that the unit squeezing assembly for the plastic containers in axial position uses two pairs of squeezing rollers (12) with a further interposed roller pair (25) with a smaller diameter, still indented in the same way to centrally determine an introduction space for the container neck and for dragging it. This enables to use squeezing rollers with smaller diameter and, consequently, a reduction of the machine encumbrance

4) Unit for collecting and recycling used bottles, cans and similar in metal and plastic materials, as per claim 1), characterized by the fact that the squeezing assembly for metal material containers uses roller pairs (19) fitted with outer flat teeth which are partly tangent (26) and partly compenetrating (27) which enables to hool the introduced bodies and to expell them when discharging.

5) Unit for collecting and recycling used bottles, cans and similar in metal and plastic material, as per claim 1), characterized by the fact that the squeezing roller assembly for plastic containers consisting of three roller pairs (l2 and 25) and the one for metal containers cosisting of a pair of rollers (19), form an only one co-turning combined assembly of the said operative cycles driven by only one moto-reducer system.

6) Unit for collecting and recyclig used bottles, cans and similar in metal and plastic.material, as per claim 1), characterized by the fact that the distributor of full bottles, to incentivate the delivery of empty containers, uses two cases (28 and 29) to compact in different ways on the containment body of the unit. This distributor carries out the automatic distribution of the containers through two doors (30 and 31).

7) Unit for collecting and recycling used bottles, cans and similar in metal and plastic material, as per claim 1), characterized by the fact that the computerized system performs a magnetic card which credits the number of the containers delivered back and, as the foreseen number has been reached, it entitles to receive a filled container.

8) Unit for collecting and recycling used bottles, cans and similar in metal and plastic material, as per claim 1), characterized by the fact that it can deliver a tear check showing the amount to pay back beside the number of the delivered containers, or alternatively the number of filled containers the customer is entitled to receive.

9) Unit for collecting and recycling used bottles, cans and similar in metal and plastic material, as per claim 1), characterized by the fact that it is fitted with an either fixed or turning bur-code reader able to identify all the elements contained in the said code, as for instance the manufacturer, the packing typology and anything else that has been codified. This lot of information can bse subsequently transferred on a proper storage centralized computer system. In this case, not only the data storage but also a system of centralized maintenance will be possible.

FIG.1

FIG.2

FIG.3

FIG 4

FIG. 5

15

2.

16

17

18

19

20

FIG. 6

22

21

FIG. 7

23

23

24

12

25

12

12

12

12

25

12

FIG. 8

FIG.9

FIG.10

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US-A-4 245 731 (R.J. HERBST)<br>* Figures 1-5 *<br>--- | 1 | B 29 B 17/00<br>B 30 B 9/30<br>G 07 F 7/06<br>B 65 F 1/00 |
| A | US-A-4 443 697 (D.M. RYAN)<br>* Figures 1-3 *<br>--- | 1 | |
| A | US-A-4 784 251 (B.H. DEWOOLFSON)<br>* Figures 1-8 *<br>--- | 1 | |
| A | US-A-4 345 679 (B.H. DEWOOLFSON)<br>* Figures 1-6 *<br>--- | 1 | |
| A | WO-A-8 604 014 (VAN GEMERT)<br>* Figures 1,2 *<br>--- | 2-4 | |
| A | EP-A-0 249 094 (ZIPPE)<br>* Figures 3-7 *<br>----- | 2-4 | |

TECHNICAL FIELDS SEARCHED (Int. Cl.5)

B 29 B
B 03 B
B 65 F
B 30 B
G 07 F

The present search report has been drawn up for all claims

| Place of search | Date of completion of the search | Examiner |
|---|---|---|
| THE HAGUE | 15-12-1989 | KUSARDY R. |